(19) Europäisches Patentamt
European Patent Office
Office européen des brevets

(11) Veröffentlichungsnummer: **0 245 683 A2**

(12) # EUROPÄISCHE PATENTANMELDUNG

(21) Anmeldenummer: **87106080.2**

(22) Anmeldetag: **27.04.87**

(51) Int. Cl.³: **C 08 L 69/00**
C 08 L 83/10, C 08 L 25/04
C 08 L 27/18, C 08 K 5/52
C 08 J 3/00

(30) Priorität: **10.05.86 DE 3615768**

(43) Veröffentlichungstag der Anmeldung:
**19.11.87 Patentblatt 87/47**

(84) Benannte Vertragsstaaten:
**DE FR GB IT NL**

(71) Anmelder: **BAYER AG**
**Konzernverwaltung RP Patentabteilung**
**D-5090 Leverkusen 1 Bayerwerk(DE)**

(72) Erfinder: **Kress, Hans-Jürgen, Dr. c/o Mobay Corporation**
**Plastics and Rubber Div. Building 8**
**Mobay Road Pittsburgh, PA 15205(US)**

(72) Erfinder: **Lindner, Christian, Dr.**
**Riehlerstrasse 200**
**D-5000 Köln 60(DE)**

(72) Erfinder: **Müller, Friedemann, Dr.**
**Am Steinacker 5**
**D-4040 Neuss 21(DE)**

(72) Erfinder: **Paul, Winfried, Dr.**
**Bethelstrasse 22**
**D-4150 Krefeld(DE)**

(72) Erfinder: **Peters, Horst, Dr.**
**Winterberg 25**
**D-5090 Leverkusen 3(DE)**

(72) Erfinder: **Buekers, Josef**
**Kneinstrasse 58a**
**D-4150 Krefeld(DE)**

(54) **Thermoplastische Formmassen mit flammwidrigen Eigenschaften.**

(57) Gegenstand der vorliegenden Erfindung sind thermoplastische Formmassen, bestehend aus halogenfreien Polydiorganosiloxan-Polycarbonat-Blockcopolymeren, Styrol-Maleinsäureanhydrid-Copolymerisaten, Phosphorverbindungen der Formel (I)

$$R_1-O-\overset{\displaystyle O}{\overset{\|}{P}}-O-R_2 \quad \text{mit } P-(O)_n-R_3 \qquad (I)$$

und Tetrafluorethylenpolymerisaten und gegebenenfallsweiteren bekannten Zusätzen.

EP 0 245 683 A2

BAYER AKTIENGESELLSCHAFT 5090 Leverkusen, Bayerwerk
Konzernverwaltung RP
Patentabteilung PS/li-c

# Thermoplastische Formmassen mit flammwidrigen Eigenschaften

Gegenstand der europäischen Patentanmeldung Nr. 85 114 310.7 (Le A 23 439) sind thermoplastische Formmassen, bestehend aus

A.) 50-90 Gew.-Teilen eines thermoplastischen, halogenfreien, aromatischen Polycarbonats,

B.) 10-50 Gew.-Teilen eines halogenfreien statistisch aufgebauten Copolymerisats aus 95-70 Gew.-%, vorzugsweise 90-75 Gew.-% Styrol, α-Methylstyrol oder kernalkylierten Styrolen oder Mischungen der genannten Vinylaromaten und 5-30 Gew.-%, vorzugsweise 10-25 Gew.-% Maleinsäureanhydrid,

C.) 1-20 Gew.-Teilen, vorzugsweise 5-15 Gew.-Teilen, bezogen auf 100 Teile Gesamtgewicht aus A) + B), einer halogenfreien Phosphorverbindung der Formel

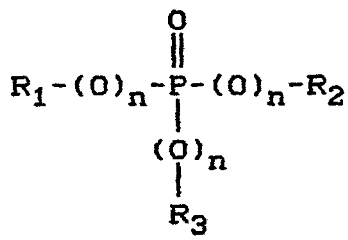

(I)

worin

$R_1$, $R_2$ und $R_3$ unabhängig voneinander ein $C_1$-$C_8$-Alkyl oder ein gegebenenfalls alkylsubstituiertes $C_6$-$C_{20}$-Aryl sind und n für 0 oder 1 steht, und

D.) 0,05-5 Gew.-Teile, bezogen wiederum auf 100 Teile Gesamtgewicht aus A) + B), insbesondere 0,1-1 Gew.-Teile eines Tetrafluorethylenpolymerisats.

Gemäß dieser europäischen Patentanmeldung geeignete thermoplastische, halogenfreie aromatische Polycarbonate gemäß Komponente A.) sind solche auf Basis der Diphenole der Formel (II)

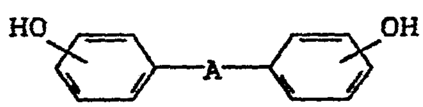

(II)

worin

A eine Einfachbindung, ein $C_1$-$C_5$-Alkylen, ein $C_2$-$C_5$-Alkyliden, ein $C_5$-$C_6$-Cycloalkyliden, -S- oder -$SO_2$- sind.

Geeignete Diphenole der Formel (II) sind beispielsweise Hydrochinon, Resorcin, 4,4'-Dihydroxydiphenyl, 2,2-Bis-(4-hydroxyphenyl)-propan, 2,4-Bis-(4-hydroxyphenyl)-2-methylbutan oder 1,1-Bis-(4-hydroxyphenyl)-cyclohexan.

Bevorzugte Diphenole der Formel (II) sind 2,2-Bis-(4-hydroxyphenyl)-propan und 1,1-Bis-(4-hydroxyphenyl)-cyclohexan.

In Weiterentwicklung dieser Formmassen konnte nun gefunden werden, daß diese Formmassen bezüglich ihrer Kerbschlagzähigkeit noch verbessert werden können, wenn die Polycarbonatkomponente A) aus Polydiorganosiloxan-Polycarbonat-Blockcopolymeren besteht oder diese enthält.

Gegenstand der vorliegenden Erfindung sind somit thermoplastische Formmassen bestehend aus

A. 50-90 Gew.-Teilen eines halogenfreien Polydiorganosiloxan-Polycarbonat-Blockcopolymeren, mit mittlerem Molekulargewicht $\bar{M}_w$ (Gewichtsmittel) von 10.000 bis 200.000 und mit einem Gehalt an aromatischen Carbonatstruktureinheiten zwischen 75 Gew.-% und 99 Gew.-%, vorzugsweise zwischen 75 Gew.-% und 97,5 Gew.-%, und einem Gehalt an Diorganosiloxy-Einheiten zwischen 25 Gew.-% und 1,0 Gew.-%, vorzugsweise zwischen 25 Gew.-% und 2,5 Gew.-%, wobei die Blockcopolymeren, ausgehend von α,ω-Bishydroxyaryloxyendgruppenhaltigen Polydiorganosiloxanen, mit einem Polymerisationsgrad $P_n$ von 5 bis 100, vorzugsweise von 20 bis 80 hergestellt werden,

B. 10-50 Gew.-Teilen eines halogenfreien statistisch aufgebauten Copolymerisats aus 95 bis 70 Gew.-%, vorzugsweise 90 bis 75 Gew.-% Styrol, α-Methylstyrol oder kernalkylierten Styrolen oder Mischungen der genannten Vinylaromaten mit 5 bis 30 Gew.-%, vorzugsweise 10 bis 25 Gew.-% Maleinsäureanhydrid,

C. 1-20 Gew.-Teilen, vorzugsweise 2 bis 15 Gew.-Teilen, bezogen auf 100 Gew.-Teile Gesamtgewicht aus A. und B., einer halogenfreien Phosphorverbindung der Formel (I),

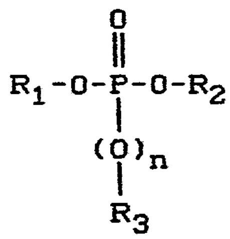

worin

$R_1$, $R_2$ und $R_3$ unabhängig voneinander $C_1$-$C_8$-Alkyl oder gegebenenfalls alkylsubstituiertes $C_6$-$C_{20}$-Aryl sind und n für 0 oder 1 steht und

D. 0,05-5 Gew.-Teilen, bezogen wiederum auf 100 Teile Gesamtgewicht aus A. + B., insbesondere 0,1 bis 2 Gew.-Teilen eines Tetrafluorethylenpolymerisats mit einer Dichte von 2,0 bis 2,3 g/cm$^3$ und einer Teilchengröße von 100 bis 1.000 µm.

Die Komponente A. kann auch eine Mischung aus halogenfreien Polydiorganosiloxan-Polycarbonat-Blockcopolymeren mit anderen siloxanfreien, thermoplastischen, halogenfreien Polycarbonaten sein, wobei der Gesamtgehalt an Diorganosiloxy-Einheiten in dieser Polycarbonat-Mischung wiederum zwischen 1 Gew.-% und 25 Gew.-%, vorzugsweise zwischen 2,5 Gew.-% und 25 Gew.-% liegt.

Legierungen aus thermoplastischen Polycarbonaten und Styrol-Maleinsäureanhydrid-Copolymeren sind bekannt [siehe beispielsweise DE-OS 2 252 974 (Le A 14 616)]. Ein wesentlicher Nachteil derartiger Legierungen ist, daß sie für manche Anwendungen, z. B. im Kfz-Innenbereich oder im Haushaltssektor eine ungenügende Zähigkeit, insbesondere Kerbschlagzähigkeit besitzen.

Dieser Nachteil kann entweder durch Einarbeitung von Pfropfkautschuksystemen und/oder Polymeren in die Mischung aus aromatischen Polycarbonaten und Styrol-Maleinsäureanhydrid-Copolymeren (siehe beispielsweise US-PS 4 218 544, US-PS 4 393 169, JA 54 050 553 und JA 55 161 846) beziehungsweise durch Verwendung von schlagfest modifiziertem Styrol-Maleinsäureanhydrid-Copolymer (siehe beispielsweise DE-OS 3 130 774, DE-OS 3 206 184, EP-A 63 634, US-PS 3 966 842 und US-PS 4 351 920) behoben werden.

Man handelt sich hierbei jedoch wieder andere Nachteile ein, beispielsweise schlechtere Verarbeitbartkeit beziehungsweise auf den Kautschuk zurückzuführende geringere Temperaturbelastbarkeit.

Aus der EP-OS 0 174 493 (Le A 23 043-EP) sind thermoplastische, flammwidrige Formmassen bekannt, die aus thermoplastischen Polycarbonaten, Pfropfpolymerisaten, Copolymerisaten, Phosph(on)atestern, Tetrafluorethylenpolymerisaten und gegebenenfalls Halogenverbindungen bestehen. Als Polycarbonate können auch Polydiorganosiloxan-Polycarbonat-Blockcopolymere eingesetzt werden.

Bevorzugte Copolymerisate sind beispielsweise solche aus Styrol und Maleinsäureanhydrid. Derartige Formmassen besitzen jedoch, wie oben erwähnt, insbesondere bei großen Kautschuk-Mengen auf den Kautschuk-Anteil zurückzuführende Nachteile, wie eine geringe Temperaturbelastbarkeit bzw. mit der Zeit nachlassende Duktilität, die durch eine Kautschukalterung hervorgerufen wird, wobei es auch zu deutlichen Vergilbungen oder Verbräunungen kommen kann. Es hat sich nun gezeigt, daß auch schon durch ausschließliche Verwendung von Polydiorganosiloxan-Polycarbonat-Blockcopolymeren und Styrol-Maleinsäureanhydrid-Copolymeren ohne Kautschuk bzw. Pfropfpolymerisat Produkte mit sehr hoher Kerbschlagzähigkeit erreicht werden können.

Erfindungsgemäß geeignete Polydiorganosiloxan-Polycarbonat-Blockcopolymere gemäß Komponente A. sind solche auf Basis der Diphenole der Formel (II) und der Formel (IIa)

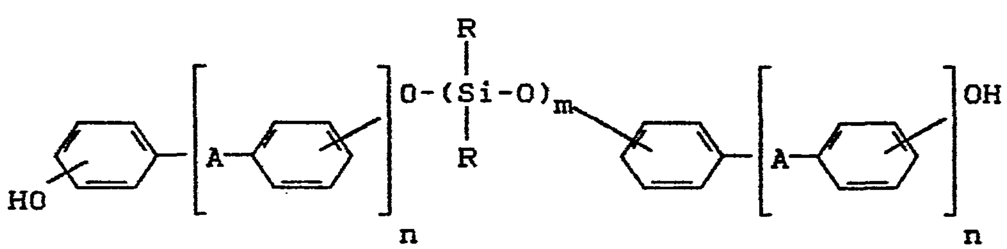

(IIa)

worin

-A- die für Formel (II) genannte Bedeutung hat, n 1 oder null ist, die R's gleich oder verschieden sind und ein lineares $C_1$-$C_{20}$-Alkyl, verzweigtes $C_3$-$C_{20}$-Alkyl oder $C_6$-$C_{20}$-Aryl, vorzugsweise $CH_3$, sind und m eine ganze Zahl zwischen 5 und 100, vorzugsweise zwischen 20 und 80 ist,

und wobei der Gewichtsanteil an Diphenolen der Formel (IIa) in den Copolycarbonaten jeweils so bemessen ist, daß der Gehalt an Diorganosiloxy-Einheiten

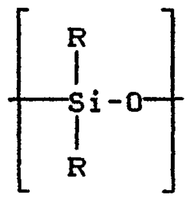

im Copolycarbonat A. zwischen 1 Gew.-% und 25 Gew.-%, vorzugsweise zwischen 2,5 Gew.-% und 25 Gew.-% beträgt.

Andere, siloxanfreie, thermoplastische, halogenfreie Polycarbonate sind vorzugsweise solche, die als Diphenole nur solche der Formel II eingebaut enthalten.

In den Fällen, in denen die Komponente A. ein Gemisch aus siloxanhaltigen Polycarbonaten und siloxanfreien Polycarbonaten ist, können die siloxanhaltigen Polycarbonate auch einen Gehalt an Diorganosiloxyeinheiten von mehr als 25 Gew.-% enthalten, sofern durch die Abmischung mit den siloxanfreien Polycarbonaten der Gehalt im Polycarbonatgemisch wiederum zwischen 1 Gew.-% und 25 Gew.-% liegt.

Die Diphenole der Formel (II) sind entweder literaturbekannt oder nach literaturbekannten Verfahren herstellbar; Polydiorganosiloxane mit Hydroxy-aryloxy-Endgruppen gemäß Formel (IIa) sind ebenfalls bekannt (s. beispielsweise US-Patent 3 419 634) bzw. nach literaturbekannten Verfahren herstellbar.

Die Herstellung der erfindungsgemäß geeigneten Polycarbonate gemäß Komponente A. ist literaturbekannt und kann beispielsweise mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. [Bezüglich Polydiorganosiloxanhaltigen Polycarbonaten siehe beispielsweise DE-OS 3 334 782 (Le A 22 594)].

Geeignete Kettenabbrecher sind beispielsweise Phenol oder p-tert.-Butylphenol, aber auch langkettige Alkylphenole wie 4-(1,3 Tetramethyl-butyl)phenol gemäß DE-OS 2 842 005 (Le A 19 006) oder Monoalkylphenole oder Dialkylphenole mit insgesamt 8 bis 20 C-Atomen in den Alkylsubstituenten gemäß deutscher Patentanmeldung P-3506472.2 (Le A 23 654), wie beispielsweise p-Nonylphenol, 2,5-di-tert. Butylphenol, p.-tert. Octylphenol, p-Dodecylphenol, 2-(3,5 dimethylheptyl)-phenol und 4-(3,5-Dimethylheptyl)-phenol. Die Menge an einzusetzenden Kettenabbrechern beträgt im allgemeinen zwischen 0,5 Mol-% und 10 Mol-%, bezogen auf die Summe der jeweils eingesetzten Diphenole (II) und (IIa).

Die erfindungsgemäß geeigneten Polycarbonate gemäß Komponente A haben mittlere Gewichtsmittelmolekulargewichte ($\bar{M}_w$, gemessen beispielsweise an Ultrazentrifugation oder Streulichtmessung) von 10.000 bis 200.000, vorzugsweise von 20.000 bis 80.000.

Geeignete Diphenole der Formel (IIa) sind solche, in denen R Methyl, Ethyl, Propyl, n-Butyl, tert.-Butyl und Phenyl ist.

Bevorzugte Diphenole der Formel (IIa) sind die der Formel (IIb)

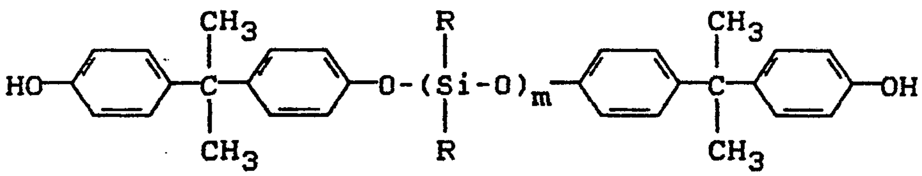 (IIb)

worin

die R's gleich sind und die vorstehend genannte Bedeutung haben, also Methyl etc. und Phenyl bedeuten und m wiederum eine ganze Zahl zwischen 5 und 100, vorzugsweise zwischen 20 und 80, ist.

Die Herstellung der Diphenole der Formel (IIa) kann beispielsweise aus den entsprechenden Bis-chlorverbindungen (III)

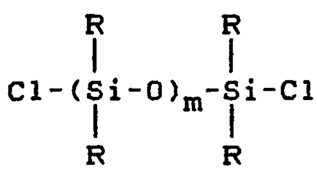 (III)

und den Diphenolen (II) beispielsweise gemäß US-Patent 3 419 634, Spalte 3 in Kombination mit US-Patent 3 182 662 erfolgen.

In den Bis-chlorverbindungen (III) haben R und m die Bedeutung wie in den Diphenolen (IIa) beziehungsweise (IIb).

Die erfindungsgemäß geeigneten Polycarbonate gemäß Komponente A können in bekannter Weise verzweigt sein, und zwar

vorzugsweise durch den Einbau von 0,05 bis 2,0 Mol-%, bezogen auf die Summe der eingesetzten Diphenole, an drei- oder mehr als dreifunktionellen Verbindungen, beispielsweise solchen mit drei oder mehr als drei phenolischen OH-Gruppen.

Bevorzugte Polydiorganosiloxan-Polycarbonat-Blockcopolymere sind Copolycarbonate der Diphenole der Formel (II) mit Diphenolen der Formel (IIb).

Die erfindungsgemäß geeigneten Styrol-Maleinsäureanhydrid-Copolymeren gemäß Komponente B. sind statistisch aufgebaut. Solche statistisch aufgebauten Copolymerisate können bevorzugt durch eine kontinuierliche Masse- oder Lösungspolymerisation bei unvollständigen Umsätzen aus den entsprechenden Monomeren hergestellt werden.

Die Anteile der beiden Komponenten der erfindungsgemäß geeigneten statistisch aufgebauten Styrol-Maleinsäureanhydrid-Copolymeren können innerhalb weiter Grenzen variiert werden. Der bevorzugte Gehalt an Maleinsäureanhydrid liegt zwischen 10 und 25 Gew.-%.

Anstelle von Styrol können die Polymeren auch kernsubstituierte Styrole wie p-Methylstyrol, Vinyltoluol, 2,4-Dimethylstyrol und andere substituierte Styrole wie α-Methylstyrol enthalten.

Die Molekulargewichte (Zahlenmittel $\bar{M}n$) der erfindungsgemäß geeigneten statistisch aufgebauten Styrol-Maleinsäureanhydrid-Copolymeren gemäß Komponente B. können über einen

weiten Bereich variieren. Bevorzugt ist der Bereich von 60.000 bis 200.000. Bevorzugt ist für diese Produkte eine Grenzviskositätszahl [η] von 0,3 - 0,9 (gemessen in Dimethylformamid bei 25°C; siehe hierzu Hoffmann, Krömer, Kuhn, Polymeranalytik I, Stuttgart 1977, Seite 316 ff.).

Die erfindungsgemäß geeigneten halogenfreien Phosphorverbindungen gemäß Komponente C. sind generell bekannt (siehe beispielsweise Ullmann, Enzyklopädie der technischen Chemie, Bd. 18, S. 301 ff., 1979; Houben-Weyl, Methoden der Organischen Chemie, Bd. 12/1, S. 43; Beilstein, Bd. 6, S. 177).

Erfindungsgemäß geeignete Phosphorverbindungen gemäß Komponente C., Formel (I), sind beispielsweise Triphenylphosphat, Trikresylphosphat, Diphenyl-2-ethylkresylphosphat, Tri-(iso-propylphenyl)-phosphat, Methylphosphonsäurediphenylester oder Phenylphosphonsäurediethylester.

Die erfindungsgemäß geeigneten Tetrafluorethylenpolymerisate gemäß Komponente D. sind Polymere mit Fluorgehalten von 65 bis 76 Gew.-%, vorzugsweise 70 bis 76 Gew.-%. Beispiele sind Polytetrafluorethylen, Tetrafluorethylen-Hexafluorpropylen-Copolymere oder Tetrafluorethylen-Copolymerisate mit geringen Mengen fluorfreier, copolymerisierbarer, ethylenisch ungesättigter Monomerer.

Diese Polymerisate sind bekannt. Sie können nach bekannten Verfahren hergestellt werden, so beispielsweise durch Polymerisation von Tetrafluorethylen in wäßrigem Medium

mit einem freie Radikale bildenden Katalysator, beispielsweise Natrium-, Kalium- oder Ammoniumperoxidisulfat bei Drucken von 7 bis 71 kg/cm$^3$ und bei Temperaturen von 0 bis 200° C, vorzugsweise bei Temperaturen von 20 bis 100° C (US-Patent 2 393 967). Die Dichte dieser Materialien liegt vorzugsweise im Bereich von 2,0 bis 2,3 g/cm$^3$ und die Teilchengrößen liegen vorzugsweise im Bereich von 100 bis 1.000 µm.

Die erfindungsgemäßen thermoplastischen Formmassen können weitere für Polycarbonate oder für Styrol-Maleinsäureanhydrid-Copolymere bekannte Zusätze wie Stabilisatoren, Pigmente, Fließmittel, Entformungsmittel und/oder Antistatika enthalten.

Die erfindungsgemäßen Formmassen, bestehend aus den Komponenten A., B., C. und D. und gegebenenfalls weiteren bekannten Zusätzen wie Stabilisatoren, Pigmenten, Fließmitteln, Entformungsmittel und/oder Antistatika werden hergestellt, indem man die jeweiligen Bestandteile in bekannter Weise vermischt und bei Temperaturen von 200 bis 330° C in üblichen Aggregaten wie Innenknetern oder Ein- oder Zweischneckenextrudern schmelzcompoundiert oder schmelzextrudiert, oder indem man die Lösungen der jeweiligen Komponenten in geeigneten organischen Lösungsmitteln, beispielsweise in Chlorbenzol, mischt und die Lösungsgemische in üblichen Aggregaten, beispielsweise in Eindampfextrudern, eindampft.

Gegenstand der vorliegenden Erfindung ist somit auch ein Verfahren zur Herstellung von thermoplastischen Formmassen

bestehend aus den Komponenten A., B., C. und D. sowie gegebenenfalls Stabilisatoren, Pigmenten, Fließmitteln, Entformungsmitteln und/oder Antistatika, das dadurch gekennzeichnet ist, daß man die Komponenten A., B., C. und D. sowie gegebenenfalls Stabilisatoren, Pigmente, Fließmittel, Entformungsmittel und/oder Antistatika nach erfolgter Vermischung bei Temperaturen von 200 bis 330°C in gebräuchlichen Aggregaten schmelzcompoundiert oder schmelzextrudiert, oder daß man die Lösungen dieser Komponenten in geeigneten organischen Lösungsmitteln nach erfolgter Vermischung in gebräuchlichen Aggregaten eindampft.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind Gehäuseteile jeder Art (z. B. für Haushaltsgeräte wie Kaffeemaschinen oder Mixer) oder Abdeckplatten für den Bausektor und Teile für den Kfz-Sektor. Sie werden außerdem auf dem Gebiet der Elektrotechnik eingesetzt, weil sie sehr gute elektrische Eigenschaften besitzen.

Eine weitere Form der Verarbeitung ist die Herstellung von Formkörpern durch Tiefziehen oder Warmverformen zuvor durch Extrusion hergestellter Platten oder Folien.

Beispiele

Eingesetzte Legierungskomponente

A.1 Ein Copolycarbonat auf Basis von Bisphenol A und 5 Gew.-% Polydimethylsiloxan der Blocklänge ($\overline{P}_n$) 40, mit einer relativen Lösungsviskosität von 1,31, gemessen in $CH_2Cl_2$ bei 25°C und einer Konzentration von 0,5 Gew.-%, hergestellt unter Verwendung von Phenol als Kettenabbrecher, gemäß DE-OS 3 334 782.

A.2 Homopolycarbonat auf Basis von Bisphenol A mit einer relativen Lösungsviskosität von 1,32, gemessen in $CH_2Cl_2$ bei 25°C und einer Konzentration von 0,5 Gew.-%, hergestellt unter Verwendung von Phenol als Kettenabbrecher.

B. Styrol-Maleinsäureanhydrid-Copolymerisat mit einem Maleinsäureanhydrid-Gehalt von 14 % und einem Zahlenmittelmolekulargewicht $\overline{M}n$ von 110.000, gemessen durch Gelchromatographie in $CH_2Cl_2$ bei 25°C und eine Auswertung über eine Polystyroleichung. (Dylark 332® der Firma ARCO).

C. Triphenylphosphat

D. Tetrafluorethylenpolymerisat in Pulverform mit einer Teilchengröße von 500 bis 650 µm und einer Dichte von 2,18 bis 2,20 $g/cm^3$ der Firma Hoechst (Hostaflon TF 2026).

Herstellung der erfindungsgemäßen Formmassen

Die Compoundierung der Komponenten A., B., C. und D. erfolgte auf einem Doppelwellenextruder (Werner und Pfleiderer) vom Typ ZSK 53 bei einer Temperatur von 230° C.

Die Herstellung von Formkörpern erfolgte auf einer Spritzgußmaschine bei 260° C.

Das Brandverhalten der Proben wurde nach UL-Subj. 94 V in Prüfkörperdicken von 1,6 mm bzw. 3,2 mm gemessen. Der UL-94-Test wird wie folgt durchgeführt:

Substanzproben werden zu Stäben der Abmessungen 127 x 12,7 x 1,6 mm bzw. 127 x 12,7 x 3,2 mm geformt. Die Stäbe werden vertikal so montiert, daß die Unterseite des Probekörpers sich 305 mm über einem Streifen Verbandstoff befindet. Jeder Probestab wird einzeln mittels zweier aufeinanderfolgender Zündvorgänge von 10 s Dauer entzündet, die Brenneigenschaften nach jedem Zündvorgang werden beobachtet und danach die Probe bewertet. Zum Entzünden der Probe wird ein Bunsenbrenner mit einer 10 mm (3,8 inch) hohen blauen Flamme von Erdgas mit einer Wärmeeinheit von 3,73 x $10^4$ $kJ/m^3$ (1.000 BUT per cubic foot) benutzt.

Die UL-94 V-O-Klassifizierung umfaßt die nachstehend beschriebenen Eigenschaften von Materialien, die gemäß der UL-94-Vorschrift geprüft wurden. Die Polycarbonatformmassen in dieser Klasse enthalten keine Proben, die länger als 10 s nach jeder Einwirkung des Testflamme brennen; sie

zeigen keine Gesamtflammzeit von mehr als 50 s bei der zweimaligen Flammeinwirkung auf jeden Probensatz; sie enthalten keine Proben, die vollständig bis hinauf zu der am oberen Ende der Probe befestigten Halteklammer abbrennen; sie weisen keine Proben auf, die die unterhalb der Probe angeordnete Watte durch brennende Tropfen oder Teilchen entzünden; sie enthalten auch keine Proben, die länger als 30 s nach Entfernen der Testflamme glimmen.

Andere UL-94-Klassifizierungen bezeichnen Proben, die weniger flammwidrig und selbstverlöschend sind und die flammende Tropfen oder Teilchen abgeben. Diese Klassifizierungen werden mit UL-94 V-1 und V-2 bezeichnet. N. b. heißt "nicht bestanden" und ist die Klassifizierung von Proben, die eine Nachbrennzeit von $\geq$ 30 s aufweisen.

Die Bestimmung der Kerbschlagzähigkeit erfolgte in Ablehnung an DIN 53 453/ISO R 179 an Stäben der Abmessung 50 x 6 x 4 mm, wobei die Stäbe mit einer V-förmigen Kerbe der Kerbtiefe 2,7 mm versehen wurden.

Die Bestimmung der Wärmeformbeständigkeit nach Vicat (Methode B) erfolgte gemäß DIN 53 460.

Aus der folgenden Tabelle können die genauen Zusammensetzungen der geprüften Formmassen sowie die erhaltenen Prüfdaten entnommen werden.

Tabelle

| A 1 | A 2 | B | C | D | Kerbschlagzähigkeit | Wärmeformbest. | UL-94 V | |
|---|---|---|---|---|---|---|---|---|
| | (Gew.-Teile) | | | | ($kJ/m^2$) | ($^oC$) | 3,2 mm | 1,6 mm |
| erfindungsgemäße Beispiele | | | | | | | | |
| 80 | | 20 | 10 | 0,3 | 18,1 | 101 | VO | VO |
| 70 | | 30 | 10 | 0,3 | 19,2 | 103 | VO | V1 |
| Vergleichsbeispiele | | | | | | | | |
| | 80 | 20 | 10 | 0,3 | 11,6 | 107 | VO | VO |
| | 70 | 30 | 10 | 0,3 | 13,8 | 105 | VO | V1 |

## Patentansprüche

1. Thermoplastische Formmassen, bestehend aus

A.
50-90 Gew.-Teilen eines halogenfreien Polydiorganosiloxan-Polycarbonat-Blockcopolymeren, mit mittlerem Molekulargewicht $\bar{M}_w$ von 10.000 bis 200.000 und mit einem Gehalt an aromatischen Carbonatstruktureinheiten zwischen 75 Gew.-% und 99 Gew.-% und einem Gehalt an Diorganosiloxy-Einheiten zwischen 25 Gew.-% und 1 Gew.-%, wobei die Blockcopolymeren, ausgehend von α,ω-Bishydroxyaryloxyendgruppenhaltigen Polydiorganosiloxanen, mit einem Polymerisationsgrad $P_n$ von 5 bis 100 hergestellt werden,

B.
10-50 Gew.-Teilen eines halogenfreien statistisch aufgebauten Copolymerisats aus 95-70 Gew.-% Styrol, α-Methylstyrol oder kernsubstituierten Styrolen oder Mischungen der genannten Vinylaromaten mit 5 bis 30 Gew.-% Maleinsäureanhydrid,

C.
1-20 Gew.-Teilen, bezogen auf 100 Gew.-Teile, Gesamtgewicht aus A. und B., einer halogenfreien Phosphorverbindung der Formel (I),

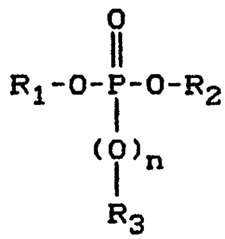 (I)

worin

$R_1$, $R_2$ und $R_3$ unabhängig voneinander $C_1$-$C_8$-Alkyl oder gegebenenfalls alkylsubstituiertes $C_6$-$C_{20}$-Aryl sind und n für 0 oder 1 steht und

D.
0,05-5 Gew.-Teilen, bezogen wiederum auf 100 Teile Gesamtgewicht aus A. und B. eines Tetrafluorethylenpolymerisats mit einer Dichte von 2,0 - 2,3 g/cm³ und einer Teilchengröße von 100 bis 1.000 µm.

2. Formmassen gemäß Anspruch 1, dadurch gekennzeichnet, daß die Komponente A eine Mischung von halogenfreien Polydiorganosiloxan-Polycarbonat-Blockcopolymeren mit anderen, siloxanfreien thermoplastischen, halogenfreien Polycarbonaten ist, wobei der Gesamtgehalt an Diorganosiloxy-Einheiten in dieser Polycarbonat-Mischung wiederum zwischen 1 Gew.-% und 25 Gew.-% liegt.

3. Formmassen gemäß Ansprüchen 1 und 2, dadurch gekennzeichnet, daß die Komponente B. aus 90-75 Gew.-%

Styrol, α-Methylstyrol oder kernsubstituiertem Styrol oder Mischungen dieser Vinylaromaten mit 10-25 Gew.-% Maleinsäureanhydrid aufgebaut ist.

4. Formmassen gemäß Ansprüchen 1 bis 3, dadurch gekennzeichnet, daß die Komponente C in Mengen von 2 bis 15 Gew.-Teilen, bezogen auf 100 Gew.-Teile aus A. und B. eingesetzt wird.

5. Formmassen gemäß Ansprüchen 1 bis 4, dadurch gekennzeichnet, daß die Komponente D. in Mengen von 0,1 bis 2,0 Gew.-Teilen, bezogen auf 100 Gew.-Teile aus A. und B. eingesetzt wird.

6. Formmassen gemäß Ansprüchen 1 bis 5, dadurch gekennzeichnet, daß sie mindestens einen Zusatzstoff, ausgewählt aus der Gruppe der Stabilisatoren, Pigmente, Fließmittel, Entformungsmittel und Antistatika enthalten.

7. Verfahren zur Herstellung der Formmassen gemäß Ansprüchen 1 bis 5, dadurch gekennzeichnet, daß man die Komponenten A bis D in bekannter Weise vermischt und danach bei Temperaturen von 200°C bis 330°C in gebräuchlichen Aggregaten schmelzcompoundiert oder schmelzextrudiert.

8. Verfahren zur Herstellung der Formmassen gemäß Ansprüchen 1 bis 5, dadurch gekennzeichnet, daß man Lösungen der Komponenten A bis D in geeigneten organischen Lösungsmitteln mischt und danach die Lösungsgemische in gebräuchlichen Eindampfaggregaten eindampft.

9. Verfahren zur Herstellung der Formmassen des Anspruchs 6 gemäß den Ansprüchen 7 und 8, dadurch gekennzeichnet, daß man mindestens einen Zusatz, ausgewählt aus der Gruppe der Stabilisatoren, Pigmente, Fließmittel, Entformungsmittel und Antistatika, einbezieht.